# EUROPÄISCHE PATENTANMELDUNG

(11) **EP 1 449 872 A1**
(43) Veröffentlichungstag der Anmeldung: **25.08.2004**
(21) Anmeldenummer: 03003939.0
(22) Anmeldetag: 21.02.2003
(51) Int. Cl.: C08K 5/3435, C08K 5/353, C08K 5/09, C08K 5/092, C08K 5/51, C08K 5/43

(54) **Stabilisierung polymerer Materialien**

(71) Anmelder: CLARIANT INTERNATIONAL LTD., 4132 Muttenz (CH)
(72) Erfinder: Staniek, Peter, 79589 Binzen (DE)

(57) **Zusammenfassung**

Gegenstand der Erfindung sind salzartige Reaktionsprodukte bzw. vorgefertigte Mischungen aus Verbindungen, die eine oder mehrere Gruppen der Formeln (Ia)-(Ic) enthalten,

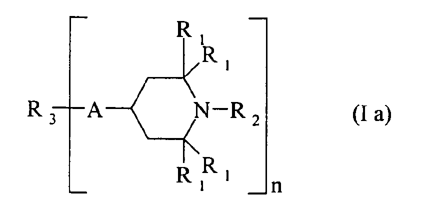

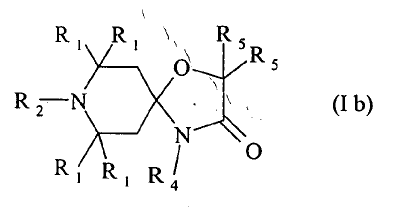

Reaktionsprodukte aus 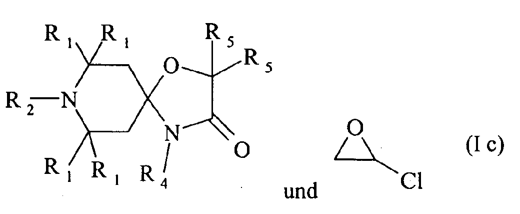 und organischen Säuren bzw. deren Derivaten, die eine oder mehrere Gruppen der Formel (IIa)-(IIc) enthalten, 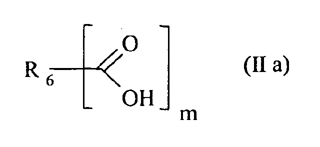 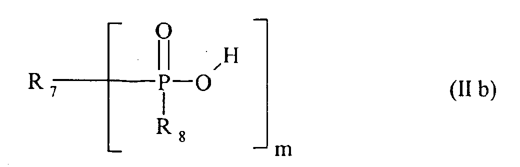 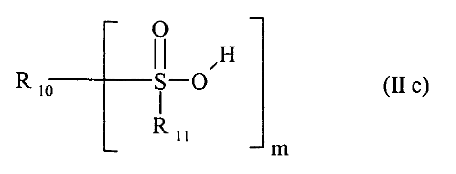 wobei die Symbole die im Patentanspruch 1 angegebenen Bedeutungen haben, sowie Verfahren zu deren Herstellung. Diese Produkte können zur Stabilisierung von Polymeren, insbesondere von polaren Polyamiden wie Polyamiden und Polyestern, und zur Verbesserung der Verarbeitungseigenschaften, des Glanzes, der Oberflächengüte und der mechanischen Eigenschaften dieser Polymere verwendet werden.

## Beschreibung

Die vorliegende Erfindung betrifft neue, salzartige Reaktionsprodukte bzw. vorgefertigte Mischungen aus Verbindungen der Gruppe der sterisch gehinderte Amine enthaltenden Lichtstabilisatoren (HALS-Verbindungen) und Carbonsäuren, Carbonsäurederivaten sowie organosubstituierter phosphor- oder schwefelbasierter Säuren, im nachfolgenden zusammenfassend organische Säuren genannt. Die salzartigen Produkte bzw. Mischungen eignen sich zur Stabilisierung polymerer Materialien gegen den Abbau durch Wärme und/oder Licht und eignen sich auch zur Verbesserung der Verarbeitbarkeit und Langzeitstabilität von Polymeren.

Wie dem Fachmann bekannt ist, wird die Stabilisierungswirkung von HALS-Verbindungen bei der Exposition mit mineralsauren Verbindungen, wie sie z.B. bei der Einwirkung sauren Regens oder auch durch Abbauprodukte von Bioziden oder Flammschutzmitteln entstehen können, in ihrer Wirksamkeit drastisch herabgesetzt. Dies wird vor allem auf die Bildung salzartiger Produkte der HALS-Verbindungen mit Mineralsäuren zurückgeführt.

Überraschenderweise wurde nun gefunden, dass die erfindungsgemässen Produkte, obwohl sie ebenfalls einen salzartigen Charakter aufweisen, zur Stabilisierung von Polymeren, insbesonders von polaren Polymeren, wie Polyamiden oder Polyestern geeignet sind. Darüberhinaus kann mit den erfindungsgemässen Produkten eine Verbesserung der Verarbeitungseigenschaften, wie Fliessverhalten während der Extrusion oder bei der Spritzgussverarbeitung, eine Verbesserung des Glanzes, der Oberflächengüte und/oder der mechanischen Eigenschaften der Endprodukte erreicht werden.

Unter HALS Verbindungen werden im folgenden allgemein Verbindungen, die eine oder mehrere Gruppen der Formel (Ia) - (Ic) enthalten, verstanden.

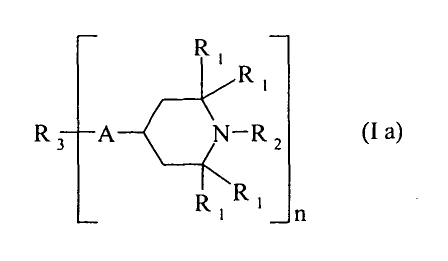

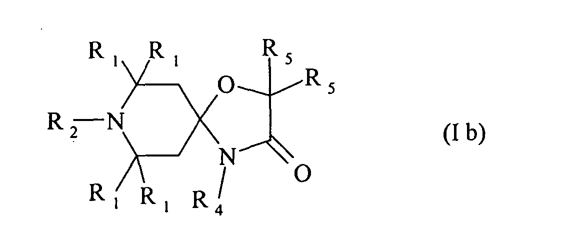

Reaktionsprodukte aus 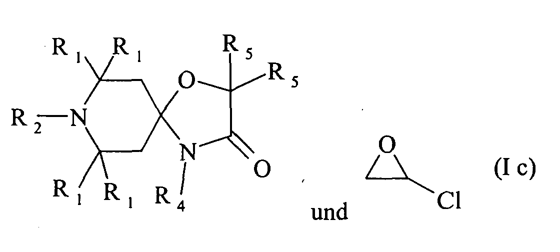 worin jeweils unabhängig voneinander
- A: -O- oder -NR'-,
- R': H, C₁-C₁₈-Alkyl oder eine der Gruppen

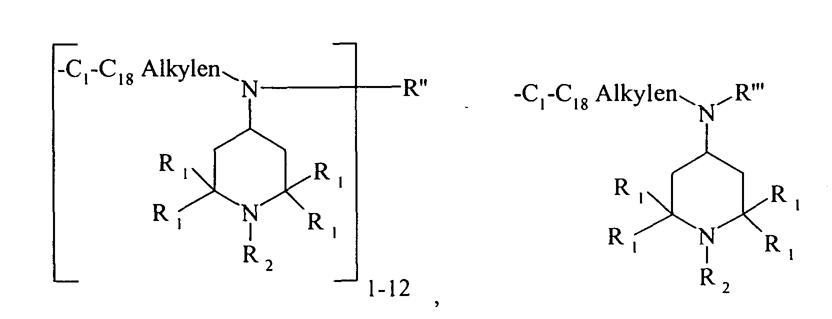

- R": H, C₁-C₁₈-Alkyl,
- R"': H, einen aliphatischen, cycloaliphatischen, aromatischen oder heteroaromatischen Rest,
- R₁: C₁-C₁₈-Alkyl, oder jeweils zwei an dem gemeinsamen Kohlenstoffatom gebundene R₁ einen C₄-C₈-Cycloalkyl Rest,
- R₂: H oder C₁-C₁₈-Alkyl, C₇-C₁₈-Alkylaryl,
- R₃: H, einen n-wertigen aliphatischen, cycloaliphatischen, aromatischen oder heteroaromatischen Rest,
- R₄: C₁-C₁₈-Alkyl, -C(O)-C₁-C₁₈-Alkyl oder -C₁-C₈-Alkyl -C(O)O-C₁-C₁₈-Alkyl;
- R₅: H, C₁-C₁₈-Alkyl, C₄-C₁₈-Cycloalkyl oder jeweils zwei an dem gleichen Kohlenstoffatom gebundene R₅ einen C₄-C₁₈-Cycloalkyl Rest,
- n: eine ganze Zahl > 0
bedeuten.

Die oben genannten organischen Säuren lassen sich durch folgende Strukturen (II a)-(II c) charakterisieren:

Unter Carbonsäuren und deren Derivaten werden im folgenden allgemein Verbindungen, die eine oder mehrere Gruppen der Formel (II a) enthalten, 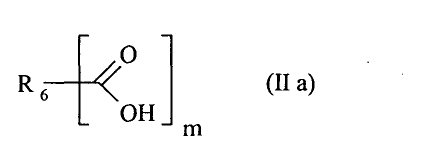 worin jeweils unabhängig voneinander
- R₆: H, einen m-wertigen aliphatischen, cycloaliphatischen, aromatischen oder heteroaromatischen Rest,
- m: eine ganze Zahl > 0
bedeuten, einschliesslich deren Anhydride, cylische Ester (Lactone) und insbesonders zyklische Amide (Laktame), wie z.B. ε-Caprolactam verstanden. Letztere Carbonsäurederivate können sich nach einer Hydrolyse bzw. Ringöffnungsreaktion im wässrigen Reaktionsmedium wie Monocarbonsäuren verhalten.

Erfindungsgemässe phosphororganische Säuren sind Verbindungen der Formel (II b), 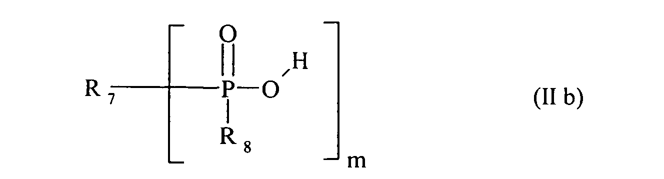 worin jeweils unabhängig voneinander
- R₇: H, einen m-wertigen aliphatischen, cycloaliphatischen, aromatischen, heteroaromatischen Rest oder einen Rest -OR₉ ;
- R₈: H, einen aliphatischen, cycloaliphatischen, aromatischen, heteroaromatischen Rest oder einen Rest -OR₉;
- R₉: H, einen aliphatischen, cycloaliphatischen, aromatischen, oder heteroaromatischen Rest
- m: eine ganze Zahl > 0
bedeuten.

Erfindungsgemässe schwefelorganische Säuren sind Verbindungen der Formel (II c), 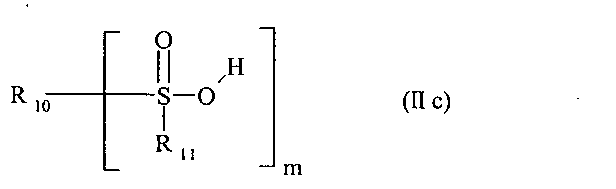 worin jeweils unabhängig voneinander
- R₁₀: einen m-wertigen aliphatischen, cycloaliphatischen, aromatischen, oder heteroaromatischen Rest oder einen Rest -OR₁₂;
- R₁₁: ein Elektronenpaar oder =O;
- R₁₂: einen aliphatischen, cycloaliphatischen, aromatischen, oder heteroaromatischen Rest
- m: eine ganze Zahl > 0
bedeuten.

Bevorzugte Gruppen R' sind H, Methyl oder eine der Gruppen

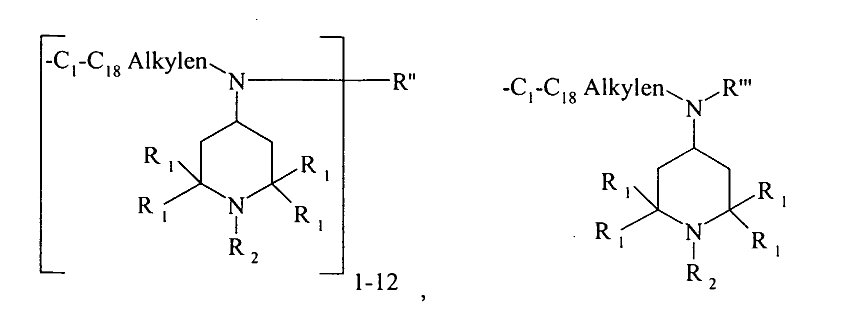

Bevorzugte Gruppen R" sind H, C₁-C₈-Alkyl.

Bevorzugte Gruppen R"' stellen die folgenden Reste
- R"': C₁-C₁₈-Alkyl, C₁-C₁₈-Alkylen, C₅-C₁₂-Cycloalkyl, C₅-C₁₂-Cycloalkylen, C₆-C₁₈-Aryl, C₆-C₁₈-Arylen, C₅-C₁₈-Heteroaryl, C₅-C₁₈-Hetetoarylen, C₆-C₃₆-Arylalkyl, C₆-C₃₆-Arylalkylen, C₆-C₃₆-Alkylaryl,C₆-C₃₆-Alkylarylen und der Rest 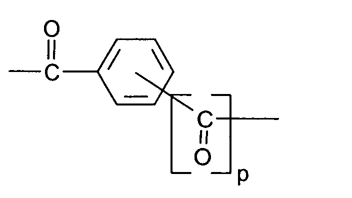 worin p eine ganze Zahl von 1-4 bedeutet,
dar.

Bevorzugte Gruppen R₁ sind Methyl oder jeweils zwei an dem gemeinsamen Kohlenstoffatom gebundene R₁ einen C₄-C₆-Cycloalkylrest.

Bevorzugte Gruppen R₂ sind H, C₁-C₁₂-Alkyl oder Benzyl.

Bevorzugte Gruppen R₃ stellen die folgenden Reste
- R₃: C₁-C₁₈-Alkyl, C₁-C₁₈-Alkylen, C₅-C₁₂-Cycloalkyl, C₅-C₁₂-Cycloalkylen, C₆-C₁₈-Aryl, C₆-C₁₈-Arylen, C₅-C₁₈-Heteroaryl, C₅-C₁₈-Heteroarylen, C₆-C₃₆-Arylalkyl, C₆-C₃₆-Arylalkylen, C₆-C₃₆-Alkylaryl,C₆-C₃₆-Alkylarylen und der Rest 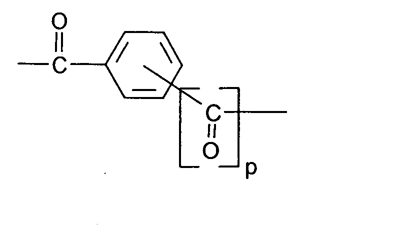 worin p eine ganze Zahl von 1-4 bedeutet,
dar.

Bevorzugte Gruppen R₄ sind C₁-C₁₂-Alkyl, -C(O)-C₁-C₁₆-Alkyl oder -C₁-C₄-Alkyl-C(O)O-C₁-C₁₆-Alkyl;

Bevorzugte Gruppen R₅ sind C₁-C₈-Alkyl oder jeweils zwei an dem gleichen Kohlenstoffatom gebundene R₅ einen C₆-C₈-Cycloalkyl bildenden Rest;

Bevorzugte Gruppen R₆ sind C₁-C₁₈-Alkyl, C₁-C₁₈-Alkylen, C₅-C₁₂-Cycloalkyl, C₅-C₁₂-Cycloalkylen, C₆-C₁₈-Aryl, C₆-C₁₈-Arylen, C₅-C₁₈-Heteroaryl, C₅-C₁₈-Heteroarylen, C₆-C₃₆-Arylalkyl, C₆-C₃₆-Arylalkylen, C₆-C₃₆-Alkylaryl,C₆-C₃₆-Alkylarylen;

Bevorzugte Gruppen R₇ sind H, C₁-C₁₈-Alkyl, C₁-C₁₈-Alkylen, C₅-C₁₂-Cycloalkyl, C₅-C₁₂-Cycloalkylen, C₆-C₁₈-Aryl, C₆-C₁₈-Arylen, C₅-C₁₈-Heteroaryl, C₅-C₁₈-Heteroarylen, C₆-C₃₆-Arylalkyl, C₆-C₃₆-Arylalkylen, C₆-C₃₆-Alkylaryl,C₆-C₃₆-Alkylarylen, -OR₉;
und bevorzugte Gruppen R₈ sind H, C₁-C₁₈-Alkyl, C₁-C₁₈-Alkylen, C₅-C₁₂-Cycloalkyl, C₅-C₁₂-Cycloalkylen, C₆-C₁₈-Aryl, C₆-C₁₈-Arylen, C₅-C₁₈-Heteroaryl, C₅-C₁₈-Heteroarylen, C₆-C₃₆-Arylalkyl, C₆-C₃₆-Arylalkylen, C₆-C₃₆-Alkylaryl,C₆-C₃₆-Alkylarylen, -OR₉;

Bevorzugte Gruppen R₉ sind H, C₁-C₃₆-Alkyl, C₅-C₁₂-Cycloalkyl, C₆-C₁₈-Aryl, C₅-C₁₈-Heteroaryl, C₆-C₃₆-Arylalkyl, C₆-C₃₆-Alkylaryl;

Bevorzugte Gruppen R₁₀ sind C₁-C₁₈-Alkyl, C₁-C₁₈-Alkylen, C₅-C₁₂-Cycloalkyl, C₅-C₁₂-Cycloalkylen, C₆-C₁₈-Aryl, C₆-C₁₈-Arylen, C₅-C₁₈-Heteroaryl, C₅-C₁₈-Heteroarylen, C₆-C₃₆-Arylalkyl, C₆-C₃₆-Arylalkylen, C₆-C₃₆-Alkylaryl,C₆-C₃₆-Alkylarylen;

Bevorzugte Gruppe R₁₁ ist =O;

Bevorzugte Gruppen R₁₂ sind C₁-C₃₆-Alkyl, C₅-C₁₂-Cycloalkyl, C₆-C₁₈-Aryl, C₅-C₁₈-Heteroaryl, C₆-C₃₆-Arylalkyl, C₆-C₃₆-Alkylaryl;

Ein bevorzugter Gegenstand der Erfindung sind salzartige Verbindungen der allgemeinen Formel (III a) - (III i) 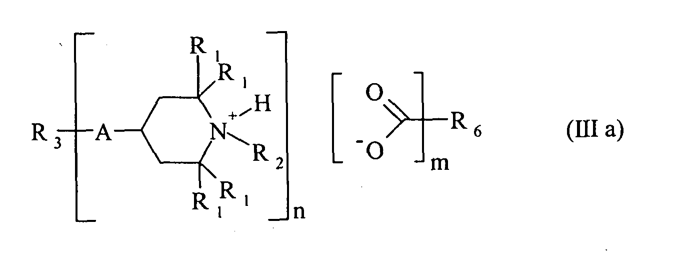 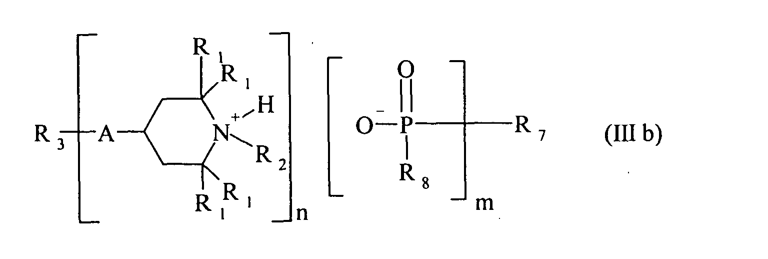 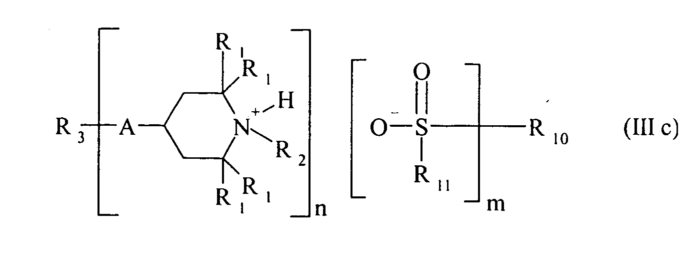 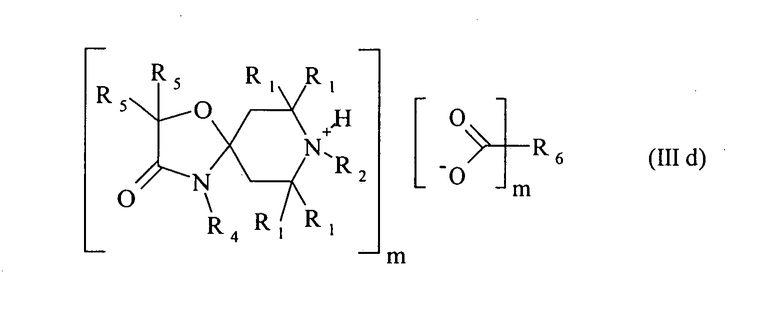 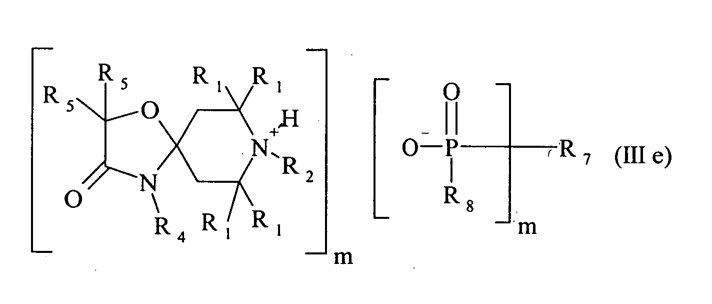 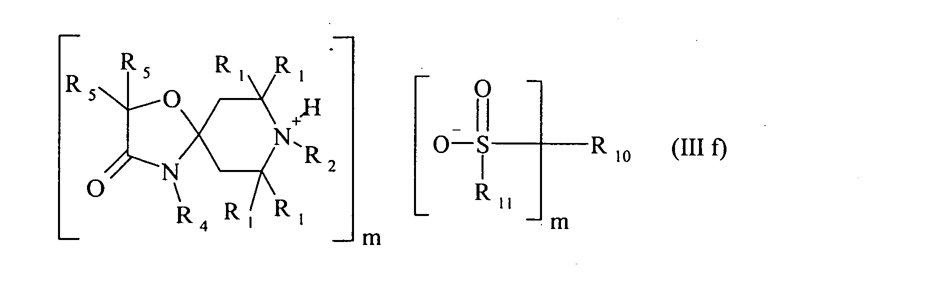 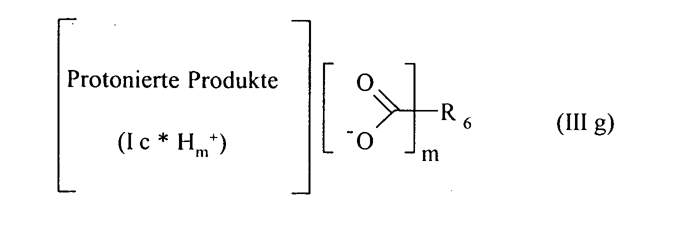 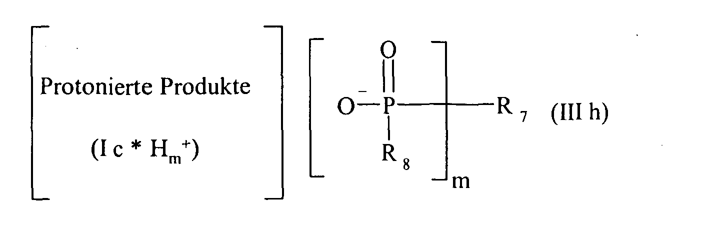 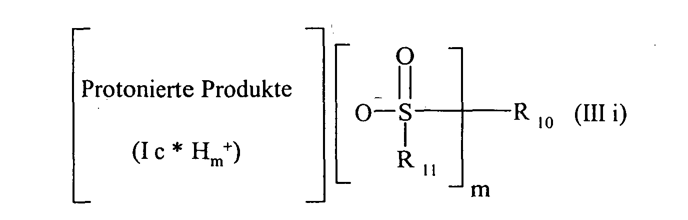 worin n und m identisch und grösser als Null sind und die anderen Substituenten wie oben definiert sind.

Solche Verbindungen der Formel (III a) - (III i) können bei polyvalenten Substituenten R₃, R₆, R₇ und R₁₀ noch weitere Gruppen der Formel (I a) und/oder (II a) -(II c) enthalten.

Ebenfalls Gegenstand der Erfindung sind die neuen Verbindungen der Formel (IV)-(VI), 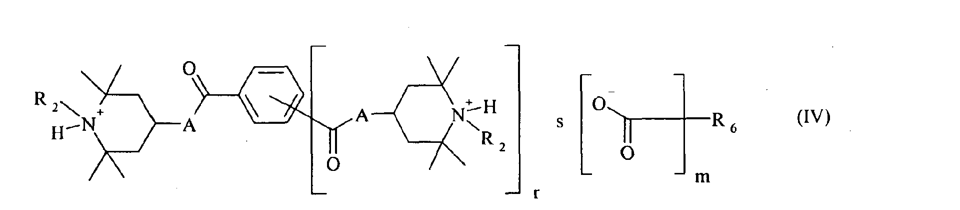 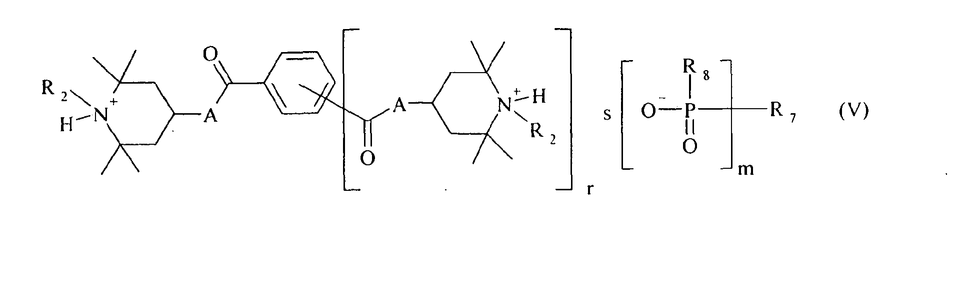 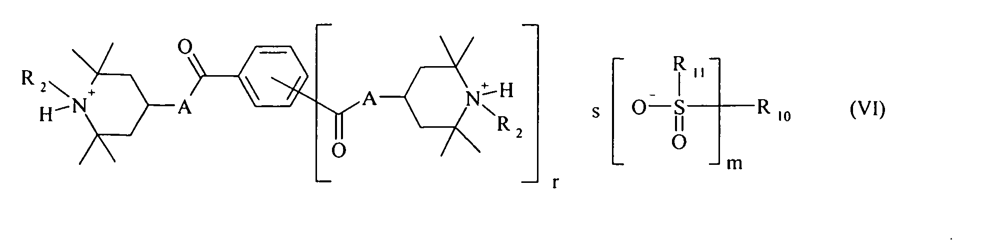 wobei
- r: eine ganze Zahl zwischen 0 und 3,
- s: (r+1 )/m bedeuten und
- m: wie oben definiert ist,
welche auch besonders bevorzugte Vertreter der Verbindungen (III a - III c) darstellen.

Diese neuen, erfindungsgemässen Verbindungen lassen sich durch Reaktion von einer oder mehreren HALS-Verbindungen mit einer oder mehreren organischer Säuren herstellen, wobei, je nach molaren Verhältnissen der Reaktionspartner und der Reaktionsbedingungen, vollständig oder teilweise Aminsalze der organischen Säuren gebildet werden. Diese Salze weisen gegenüber den Ausgangsverbindungen eine teilweise beträchtlich höhere Wasserlöslichkeit oder Löslichkeit in niederen Alkoholen auf.

Diese erfindungsgemässen Verbindungen lassen sich in Lösungsmitteln, ggf. bevorzugt in Wasser oder niederen Alkoholen, aber auch in der Schmelze herstellen. Die erhaltenen Lösungen können einerseits direkt eingesetzt werden oder die Verbindungen werden zuvor durch Entfernen des Lösungsmittels isoliert und die resultierenden Feststoffe, gegebenenfalls nach einer weiteren Konfektionierung, verwendet.

Die Anwendung solcher Verbindungen in Polykondensationspolymeren wie Polyamid 6.6, PET oder vergleichbaren Typen, die aus einer Di-Säure- und einer Di-Amin- bzw. Diolkomponente hergestellt werden, ist besonders vorteilhaft, da sie sich aufgrund ihrer z.T. guten Löslichkeit während der ablaufenden Polykondensationsreaktion leicht und homogen im Reaktionsmedium verteilen lassen. Die HALS-Verbindungen selbst sind dagegen aufgrund ihres hydrophoben Charakters wenig löslich und sind daher schwieriger homogen einzuarbeiten.

Andere Vertreter dieser erfindungsgemässen Verbindungen sind dagegen aufgrund geringerer Polarität besser zur Einarbeitung in eine Polymerschmelze geeignet. Es wurde gefunden, dass sich die jeweils bevorzugten Eigenschaften durch Wahl der Komponenten in weiten Grenzen beeinflussen lassen.

Ein weiterer Gegenstand der Erfindung sind vorgefertigte -konfektionierte- Mischungen - in der Kunststoffindustrie "Blends" genannt - bestehend aus den beiden Komponenten I und II in den gewünschten molaren Verhältnissen. Die erfindungsgemässen Salze der Formel III können dabei schon teilweise oder vollständig im Konfektionierungschritt gebildet werden, oder aber auch beim Eintragen in die Polymermasse, bzw. deren Rohstoffe entstehen. Letztere können z.B. ε-Caprolactam (bei PA6), AH-Salz-Lösung (bei PA6.6) oder Präkondensate aus Di-Säuren und Diolen (Polyester) sein.

Wie der Fachmann weiss, können solche Salze bzw. Mischungen bei der Anwendung von HALS-Verbindungen während der Polykondensation entstehen und bei fortgesetzter Polykondensation wieder verschwinden.

Die vorgefertigten Mischungen dieser Erfindung sind jedoch bestimmte, mit Vorbedacht in ausgewählten molaren Verhältnissen, nach grosstechnischen Verfahren hergestellten Mischungen, die je nach Verfahrensbedingungen bereits teilweise Salze der Formel III enthalten, und so konzipiert worden sind, dass mit diesen "Blends" die gewünschten Mengen der Komponenten I und II zu den Polykondensaten gegeben werden. Diese vorgefertigten Mischungen können durch Formgebung aus der Schmelze (Tropfgranulation, Prilling, Extrusion, etc.), Kompaktierung (Rollenkompaktierung, Tablettierung, Brikettierung, Pressgranulation, etc.) oder Granulationsverfahren (Sprühen, Wirbelschichtgranulation, Trommeln, Rondieren, etc.) erhalten werden.

Die HALS-Verbindungen, als auch die organischen Säuren bzw. deren Derivate können jeweils mono- oder oligofunktional sein, bevorzugt werden aber HALS-Verbindungen mit einer HALS-Gruppe und difunktionale organische Säuren, HALS-Verbindungen mit zwei oder mehr HALS-Gruppen und difunktionale organische Säuren oder HALS-Verbindungen mit zwei oder mehr HALS-Gruppen und monofunktionale organische Säuren eingesetzt. Je nach Anforderung kann das molare Verhältnis zwischen HALS-Gruppen und Gruppen organischer Säuren zwischen 1:99 und 99:1 variieren, bevorzugt sind aber Verhältnisse von 40:60 bis 60:40, insbesonders 45:55 bis 55:45 und vor allem äquimolare Verhältnisse (50:50).

Bevorzugte Carbonsäuren der Formel (II a) sind C₁-C₈₀Alkylcarbonsäuren, C₁-C₁₈-Alkylendicarbonsäuren, C₅-C₁₈Cycloalkancarbonsäuren, C₅-C₁₈Cycloalkylendicarbonsäuren, C₆-C₁₉Arylcarbonsäuren, C₆-C₂₀Arylendicarbonsäuren, C₂-C₁₂-Alkylcarbonsäureanhydride, C₇₋₁₈Arylcarbonsäureanhydride oder C₆-C₁₈Lactame.

Bevorzugte phosphororganische Säuren der Formel (II b) sind C₁-C₁₈Alkylphosphinsäuren, Di(C₁-C₁₈Alkyl)phosphinsäuren, C₅-C₁₈Cycloalkyl-phosphinsäuren, Di(C₅-C ₁₈cyctoalkyt)phosphinsäuren, C₆-C₁₈Arylphosphinsäuren, Di(C₆-C₁₈aryl)-phosphinsäuren, C₇-C₃₆Alkylarylphosphinsäuren, C₇-C₃₆Arylalkylphosphinsäuren, Di(C₇-C₃₆alkylaryl)phosphinsäuren, Di(C₇-C₃₆arylalkyl)phosphinsäuren, C₁-C₁₈-Alkylen-bisphosphinsäuren, C₁-C₁₈Alkylphosphonsäuren, C₁-C₁₈Alkylphosphonsäure monoester, C₅-C₁₈Cycloalkyl-phosphonsäuren, C₅-C₁₈cycloalkylphosphonsäure monoester, C₆-C₁₈Arylphosphonsäuren, C₆-C₁₈Arylphosphonsäure monoester, C₇-C₃₆-Alkylarylphosphonsäuren, C₇-C₃₆Alkylarylphosphonsäure monoester, C₁-C₁₈Alkylenbisphosphonsäuren, saure Phosphatester des Typs (OR₉)-P(O)(OH)₂ oder (OR₉)₂-P(O)OH.

Bevorzugte schwefelorganische Säuren der Formel (II c) sind C₁-C₁₈Alkyl-sulfonsäuren, C₁-C₁₈Sulfinsäuren, C₅-C₁₈Cycloalkylsulfonsäuren, C₅-C₁₈cycloalkylsulfinsäuren, C₆-C₁₈Arylsulfonsäuren, C₆-C₁₈Arylsulfinsäuren, C₇-C₃₆Alkylarylsulfonsäuren, C₇-C₃₆Alkylarylsulfinsäuren.

Besonders bevorzugte Carbonsäuren oder Carbonsäurederivate der Formel (II a) sind C₁-C₆₀Alkylcarbonsäuren, C₁-C₆₀Alkylendicarbonsäuren, C₆-C₁₂Cycloalkancarbonsäuren, C₆-C₁₂Cycloalkylendicarbonsäuren, C₆₋₁₂Arylcarbonsäuren, C₆₋₁₂Arylendicarbonsäuren, Caprolactam, Laurinlactam, C₁-C₆Alkylcarbonsäureanhydride oder C₆-C₁₈ Arylcarbonsäureanhydride.

Besonders bevorzugte phosphororganische Säuren der Formel (II b) sind C₁-C₁₂ Alkylphosphinsäuren, Di(C₁-C₁₂Alkyl)phosphinsäuren, C₆-C₁₂Cycloalkyl-phosphinsäuren, Di(C₆-C₁₂cycloalkyl)phosphinsäuren, C₆-C₁₂Arylphosphinsäuren, Di(C₆-C₁₂aryl)-phosphinsäuren, C₇-C₁₈Alkylarylphosphinsäuren, Di(C₇-C₁₈alkylaryl)phosphinsäuren, C₁-C₁₂Alkylen-bisphosphinsäuren, C₁-C₁₂Alkylphosphonsäuren, C₁-C₁₂Alkylphosphonsäuremonoester, C₆-C₁₂Cycloalkylphosphonsäuren, C₆-C₁₂Cycloalkylphosphonsäuremonoester, C₆-C₁₂Arylphosphonsäuren, C₆-C₁₂Arylphosphonsäuremonoester, C₇-C₁₈-Alkylarylphosphonsäuren, C₇-C₁₈Alkylarylphosphonsäure monoester, C₁-C₁₂Alkylenbisphosphonsäuren, saure Phosphatester des Typs (OR₉)-P(O)(OH)₂ oder (OR₉)₂-P(O)OH.

Besonders bevorzugte schwefelorganische Säuren der Formel (II c) sind C₁-C₁₈Alkyl-sulfonsäuren, C₆-C₁₈Arylsulfonsäuren, C₇-C₃₆Alkylarylsulfonsäuren.

Speziell bevorzugte HALS-Verbindung der Formel (I a) ist 1,3-Benzoldicarboxamid, N,N'-bis(2,2,6,6-tetramethyl-4-piperidinyl) (Nylostab® S-EED® ), der Formel (I b) sind 2,2,4,4-Tetramethyl-7-oxa-3,20-diazadispiro[5.1.11.2]heneicosan-21-on und der Formel (I c) ist Poly[[6-[(1,1,3,3-tetramethylbutyl)amino]-1,3,5-trazin-2,4-diyl][(2,2,6,6-tetramethyl-4-piperidinyl)imino]-1,6-hexandiyl-[(2,2,6,6-tetramethyl-4-piperidinyl)imino]], sowie das Reaktionsprodukt aus Hostavin® N 20 und Epichlorhydrin (Hostavin® N 30).

Speziell bevorzugte Carbonsäuren der Formel (II a) sind Adipinsäure, Terephthalsäure, Isophthalsäure, Phthalsäure, Benzoesäure und Essigsäure.

Speziell bevorzugte phosphororganische Säuren der Formel (II b) sind Methylphosphinsäure, Dimethylphosphinsäure, Methylethylphosphinsäure, Ethylphosphinsäure, Diethylphosphinsäure, Propylphosphinsäure, Di-propylphosphinsäure, Butylphosphinsäure, Dibutylphosphinsäure, Hexylphosphinsäure, Dihexylphosphinsäure, Octylphosphinsäure, Dioctylphosphinsäure, Cyclohexylphosphinsäure, Dicyclohexylphosphinsäure, Phenylphosphinsäure, Diphenylphosphinsäure, Tolylphosphinsäure, Ditolylphosphinsäure, Xylylphosphinsäure, Dixylylphosphinsäure, Biphenylphosphinsäure, Di-biphenylphosphinsäure, Methylenbisphosphinsäure, Ethylenbisphosphinsäure, 1,2-Diethyl-ethylenbisphosphinsäure, Phenylethylphosphinsäure, Di(phenyl-ethyl)phosphinsäure, Methylphosphonsäure, Ethylphosphonsäure, Methylendiphosphonsäure, Ethylendiphosphonsäure.

Speziell bevorzugte schwefelorganische Säuren der Formel (II c) sind Methansulfonsäure, Ethansulfonsäure, Benzolsulfonsäure und Toluolsulfonsäure.

Nichtlimitierende Beispiele für die HALS-Verbindungen bzw. organischer Säuren sind in den folgenden Tabellen aufgelistet. Dabei kann jede Verbindung der einen Gruppe (organische Säure), mit den Verbindungen der anderen Gruppe (HALS-Verbindung) zur Reaktion gebracht bzw. gemischt werden.
**a) HALS-Verbindungen** mit einer HALS-Gruppe
   - Fettsäure-(C₁₆C₁₈)-ester des 2,2,6,6-Tetramethyl-piperidinol (Hostavin® 845)
   - 3-Dodecenyl-1-(2,2,6,6-tetramethyl-4-piperidyl)pyrrolidin-2,5-dion (Sanduvor® 3055)
   - 2,2,4,4-Tetramethyl-7-oxa-3,20-diaza-dispiro[5.1.11.2]-heneicosan-21-on (Hostavin® N 20)
   - 2,2,4,4-Tetramethyl-20(ß-Myristyl/lauryl-oxycarbonyl)-ethyl-7-oxa-3,20-diaza-dispiro[5.1.11.2]-heneicosan-21-on (Hostavin® N 24)
   - 4-Hydroxy-2,2,6,6-tetramethylpiperidin
   - 4-Amino-2,2,6,6-tetramethylpiperidin
   - 4-Hydroxy-1,2,2,6,6-pentamethylpiperidin
   - 4-Amino-1,2,2,6,6-pentamethylpiperidin
   - 4-N-Butyl-amino-2,2,6,6-tetramethylpiperidin
   - N-Hydroxyethyl-4-hydroxy-2,2,6,6-tetramethylpiperidin
b) HALS-Verbindungen mit zwei HALS-Gruppen
   - 1,3-Benzoldicarboxamid,N,N'-bis(2,2,6,6-tetramethyl-4-piperidinyl) (Nylostab® S-EED® )
   - Propandionsäure, [(4-methoxyphenyl)-methylen)-bis(1,2,2,6,6-pentamethyl-4-piperidinyl)ester (Hostavin® PR-31)
   - Bis(2,2,6,6-tetramethyl-4-piperidinyl) Sebacinsäureester (Tinuvin® 770)
   - 1,6-Hexamethylen-bis(4-amino-2,2,6,6-tetramethylpiperidin)
   - Mischung aus Bis( 1,2,2,6,6-pentamethyl-4-piperidinyl)sebacate und Methyl(1,2,2,6,6-pentamethyl-4-piperidinyl)sebacate (Tinuvin® 292)
   - (1,2,2,6,6-pentamethyl-4-piperidinyl)-[[3,5-bis(1,1-dimethylethyl)-4-hydroxyphenyl]methyl]butylmalonate (Tinuvin® 144)
**c) HALS-Verbindungen** mit mehr als zwei HALS-Gruppen (oligomere HALS-Verbindungen)
   - Poly[[6-[(1,1,3,3-tetramethylbutyl)amino]-1,3,5-trazin-2,4-diyl][(2,2,6,6-tetramethyl-4-piperidinyl)imino]- 1,6-hexandiyl-[(2,2,6,6-tetramethyl-4-piperidinyl)imino]] (Chimassorb® 944)
   - Polymer aus 2,2,4,4-Tetramethyl-7-oxa-3,20-diaza-dispiro[5.1.11.2]-heneicosan-21-on und Epichlorhydrin (Hostavin® N 30)
   - 1,3,5-Triazine-2,4,6-Triamine, N,N"'-[1,2-ethandiyl-bis[[[4,6-bis[butyl(1,2,2,6,6-pentamethyl-4-piperidinyl)amino]-1,3,5-triazine-2-yl]-3,1-propanediyl]]bis[N',N"-dibutyl-N',N"-bis(1,2,2,6,6-pentamethyl-4-piperidinyl)- (Chimassorb® 119)
   - 1,6-Hexandiamin, N, N'-bis(2,2,6,6-tetramethyl-4-piperidinyl)-polymer mit 2,4,6-trichloro-1,3,5-triazin, Reaktionsprodukte mit N-butyl-1-butanamin und N-butyl-2,2,6,6-tetramethyl-4-piperidinamin (Chimassorb® 2020)
   - Polymer aus Butandisäure und 4-Hydroxy-2,2,5,5-tetramethyl-1-piperidinethanol (Tinuvin® 622)
**d) Difunktionale organische Säuren**
   - Maleinsäure
   - Fumarsäure
   - C₁-C₄₀-Alkylen-dicarbonsäuren
   - Phthalsäure
   - Isophthalsäure
   - Terephthalsäure
   - Naphthoe-disäuren, ggf. substituiert
   - C₁-C₁₈-Alkylen-bisphosphinsäuren
   - C₁-C₁₈-Alkylen-bisphosphonsäuren
**e) Monofunktionale organische Säuren**
   - C₁-C₄₀-Alkylcarbonsäuren
   - Benzoesäure, ggf. Substituiert
   - Naphthoesäure, ggf. Substituiert
   - Diphenylphosphinsäure
   - Phenylphosphinsäure
   - Diethylphosphinsäure
   - Ethylphosphinsäure
   - Laurinlactam
   - ε-Caprolactam

Bevorzugte Polymere zur Anwendung der erfindungsgemässen Produkte sind Polyamide, wie Polyamid 6, Polyamid 11, Polyamid 12, Polyamid 4.6, Polyamid 6.6, Polyamid 6.9, Polyamid 6.10, Polyamid 6.12, Polyamid 12.12, und Polyester wie z.B. Terephthalsäure/Alkyldiol basierte Polyester (z.B. PET, PBT), aliphatische Polyester, aromatische Polyester, flüssigkristalline Polyester, Polyetherester, und Polycarbonate sowie deren Blends und Copolymere.

Besonders bevorzugte Polymere sind Polyamid 4.6, Polyamid 6.6, Polyamid 6, Polyamid 11, Polyamid 12, Polyethylenterepthalat (PET), Polybutylenterephthalat (PBT), Polycarbonat, deren Copolymere und Blends.

Die Zugabe der erfindungsgemässen Verbindungen kann entweder vor oder während der Polymerbildungsreaktion oder aber auch nachher in weiteren Verarbeitungschritten erfolgen. Die Produkte können dabei als Feststoff (als Pulver oder in konfektionierter Form), in Lösung (in inerten oder Reaktivlösungsmitteln), bei unzersetzt schmelzbaren Verbindungen auch als Schmelze, als Masterbatch oder als Konzentrat zugesetzt werden.

Besonders vorteilhaft ist die Zugabe in freifliessender Konfektionierungsform, wie sie z.B. durch Formgebung aus der Schmelze (Tropfgranulation, Prilling, Extrusion, etc.), Kompaktierung (Rollenkompaktierung, Tablettierung, Brikettierung, Pressgranulation, etc.) oder Granulationsverfahren (Sprühen, Wirbelschichtgranulation, Trommeln, Rondieren, etc.) erhalten werden kann. Diese Konfektionierungsformen umfassen dabei auch Gemische der erfindungsgemässen Komponenten oder auch Mischungen mit weiteren Additiven (Blends).

Neben den erfindungsgemässen Additiven können zuvor, zeitgleich oder anschliessend noch weitere Additive oder Farbmittel, ggf. auch als Blend mit erfindungsgemässen Verbindungen, zugegeben werden. Beispiele solcher weiteren Additive sind Lichtschutzmittel (weitere HALS-Verbindungen, UV-Absorber, Ni-Quencher), Prozessstabilisatoren auf Phosphor- oder Schwefelbasis, Antioxidantien (Phenol- oder Aminbasiert), Antistatika, Nukleiermittel, Flammschutzmittel, Verstärkungsmittel (z.B. mineralische Füller, Glasfasern, Glashohlkugeln, Kohlefasern, nanoteilige Verstärkungsmittel (z.B. Nanoclays, Kohlenstoffnanoröhren)), Gleitmittel, Anti-Block-Mittel, Farbmittel (Pigmente und Farbstoffe) etc.

Die Herstellung und Anwendung der erfindungsgemässen Verbindungen soll durch die nachfolgenden, nicht limitierenden Beispiele gezeigt werden:

### BEISPIEL 1

### Herstellung des Salzes aus Nylostab® S-EED® und Adipinsäure

Zu einer Suspension von 75.3 g Nylostab® S-EED® in 250 ml Wasser werden 24.8 g Adipinsäure zugegeben und bei 80°C solange gerührt, bis eine klare Lösung entstanden ist. Das Wasser wird im Vakuum abgezogen und der farblose, kristalline Rückstand bei 80°C im Vakuum getrocknet.

### BEISPIEL 2

### Herstellung des Salzes aus Nylostab® S-EED® und Terephthalsäure

Analog zu Beispiel 1 aus 72,7 g Nylostab® S-EED® und 27.3 g Terephthalsäure.

### BEISPIEL 3

### Herstellung des Salzes aus Nylostab® S-EED® und Benzoesäure

Analog zu Beispiel 1 aus 64.2 g Nylostab® S-EED® und 35.4 g Benzoesäure.

### BEISPIEL 4

### Herstellung des Salzes aus Nylostab® S-EED® und Essigsäure

Analog zu Beispiel 1 aus 78.4 g Nylostab® S-EED® und 21.2 g Essigsäure.

### BEISPIEL 5

### Herstellung des Salzes aus Hostavin® N 20 und Adipinsäure

Zu einer Suspension von 87.4 g Hostavin® N 20 in 400 ml Wasser werden 19.0 g Adipinsäure zugegeben und die Mischung 48 h refluxiert. Nach dem Abkühlen wird der farblose Niederschlag abfiltriert und im Vakuum bei 80°C getrocknet.

### BEISPIEL 6

### Herstellung des Salzes aus Hostavin® N 20 und Terephthalsäure

Analog zu Beispiel 5 aus 87.4 g Hostavin® N 20 und 21.6 g Terephthalsäure.

### BEISPIEL 7

### Herstellung des Salzes aus Hostavin® N 20 und Benzoesäure

Analog zu Beispiel 5 aus 87.4 g Hostavin® N 20 und 31.7 g Benzoesäure.

### BEISPIEL 8

### Herstellung des Salzes aus Hostavin® N 20 und Essigsäure

Analog zu Beispiel 5 aus 87.4 g Hostavin® N 20 und 17.0 g Essigsäure.

### BEISPIEL 9

### Herstellung des Salzes aus Chimassorb® 944 und Essigsäure

Eine Mischung aus 86.3 g Chimassorb 944, 250 ml Wasser und 23.8 g Essigsäure werden 8 h refluxiert. Das Wasser wir azeotrop mit Toluol entfernt und das Lösungsmittel im Vakuum abgezogen. Man erhält eine weiche, beige Masse.

### BEISPIEL 10

### Herstellung des Salzes aus Chimassorb® 944 und Benzoesäure

Eine Mischung aus 70.5 g Chimassorb 944, 500 ml Wasser/Ethanol (1:1) und 39.5 g Benzoesäure werden 96 h refluxiert. Wasser und Ethanol werden azeotrop mit Toluol entfernt und das Lösungsmittel im Vakuum abgezogen. Nach Trocknung bei 120°C im Vakuum erhält man einen beigen Feststoff.

### BEISPIEL 11

### Herstellung des Salzes aus Chimassorb® 944 und Adipinsäure

Eine Mischung aus 82.5 g Chimassorb 944, 500 ml Wasser/Ethanol (1:1) und 27.6 g Adipinsäure werden 16 h refluxiert. Wasser und Ethanol werden azeotrop mit Toluol entfernt und das Lösungsmittel im Vakuum abgezogen. Nach Trocknung bei 120°C im Vakuum erhält man einen beigen, weichen Feststoff.

### BEISPIEL 12

### Herstellung des Salzes aus Chimassorb® 944 und Terephthalsäure

Eine Mischung aus 79.7 g Chimassorb 944, 500 ml Wasser/Ethanol (1:1) und 30.3 g Terephthalsäure werden 36 h refluxiert. Wasser und Ethanol werden azeotrop mit Toluol entfernt. Nach dem Abkühlen wird das beige Produkt abfiltriert und bei 120°C im Vakuum getrocknet.

### BEISPIEL 13

Eine Pulvermischung aus 30% Nylostab S-EED und 70% Terephthalsäure wird auf einem Bepex-Rollenkompaktor zu einem stabilen, farblosen und frei fliessendem Granulat geformt.

### BEISPIEL 14

Eine Pulvermischung aus 30% Nylostab S-EED und 70% Adipinsäure wird auf einem Bepex-Rollenkompaktor zu einem stabilen, farblosen und frei fliessendem Granulat geformt.

### BEISPIELE 15 - 18

Verarbeitung der erfindungsgemässen Verbindungen in Polyamiden

### Allgemeine Vorschrift zur Verarbeitung

Die erfindungsgemässen Verbindungen werden zusammen mit dem Polyamidpulver und ggf. weiteren Additiven auf einem Collin Einschneckenextruder bei der vorgegebenen Verarbeitungstemperatur homogenisiert. Dabei werden die Stromaufnahme des Extruders, der Druckverlauf an der Düse, die Massetemperatur sowie der Durchsatz bei jeweils gleichen Maschineneinstellungen registriert. Die so erhaltenen Polymerstränge werden pelletiert und wie unten beschrieben weiterverwendet.

Eine verringerte Stromaufnahme und/oder ein erhöhter Durchsatz sind kommerziell wichtige Grössen, da sie direkt die Herstellkosten beeinflussen. Ein konstanter Druck an der Düse deutet auf ein gutes Einzugs- und Förderverhalten hin und ist für die reproduzierbare Herstellbarkeit von Endartikeln, wie z.B. bei Spritzgussartikeln oder sehr gleichförmiger Fasern, von Bedeutung. Ein höherer Druck deutet dabei auf eine geringere Schädigung des Polyamides durch Kettenabau während der Verarbeitung hin; das zugesetzte Additiv leistet in diesem Falle einen Beitrag zur Polymerstabilisierung.

Die erhaltenen Ergebnisse der verschiedenen Applikationen werden in der nachstehenden Tabelle zusammengefasst.

| **Beispiel** | **Verbindung** | **Konz.** | **Polymer** | **Verarbeitungstemperatur** | **Mittl. Strom- aufnahme [A]** | **Druck [bar]** | **Durchsatz [kg/h]** |
|---|---|---|---|---|---|---|---|
| 15 | Keine | 0% | PA 6 | 250 | 4.7 ±0.2 | 50.8 ±1.4 | 5.45 |
| 16 | Beispiel 1 | 0.2% | PA 6 | 250 | 4.5 ±0.3 | 51.9 ±1.2 | 6.00 |
| 17 | Keine | 0% | PA 6.6 | 270 | 5.3 ±2.3 | 16.3 ±7.0 | 4.16 |
| 18 | Beispiel 1 | 0.2% | PA 6.6 | 270 | 3.8 ±0.6 | 21.7 ±1.2 | 5.00 |

### BEISPIELE 19 - 26

Künstliche Bewitterung und Wärmealterung von Polyamiden, enthaltend den erfindungsgemässen Stabilisator aus Beispiel 1:

### Allgemeine Vorschrift zur Verarbeitung

Die wie oben beschriebenen Polymergranulate aus Beispiel 15-18 werden in einer Arburg Allrounder Spritzgussmaschine zu 100 x 100 x 1 mm³ Platten verarbeitet Für jede Polymersorte bleiben dabei die Maschinenparameter unverändert. Die so erhaltenen Platten werden zur Untersuchung auf die Licht-und Wärmestabilisierung durch die erfindungsgemässe Verbindung aus Beispiel 1 untersucht.

### Beispiel 19-22

Farbänderung nach Exposition in Weatherometer nach ISO 11341 A (Nass-/Trockenbewitterung) bzw. ISO 11341 C (Trockenbewitterung)

| **Beispiel** | **Verbindung** | **Konz.** | **Polymer** | **ΔE**^{*****} **nach 2500 h** (ISO 11341 A) | **ΔE**^{*****} **nach 2500 h** (ISO 11341 C) |
|---|---|---|---|---|---|
| **19** | Keine | 0% | PA 6 | 25.6 | 8.2 |
| **20** | Beispiel 1 | 0.2% | PA 6 | 10.4 | 1.6 |
| **21** | Keine | 0% | PA 6.6 | 12.86 | 4.4 |
| **22** | Beispiel 1 | 0.2% | PA 6.6 | 2.64 | 2.4 |

### Beispiel 23-26

Vergilbung nach Ofenalterung bei 120°C

| **Beispiel** | **Verbindung** | **Konz.** | **Polymer** | **b**^{*****} **nach 15 Tagen bei 120°C** |
|---|---|---|---|---|
| **23** | Keine | 0% | PA 6 | 23.4 |
| **24** | Beispiel 1 | 0.2% | PA 6 | 18.2 |
| **25** | Keine | 0% | PA 6.6 | 26.2 |
| **26** | Beispiel 1 | 0.2% | PA 6.6 | 23.1 |

## Patentansprüche

1. Salzartige Reaktionsprodukte bzw. vorgefertigte Mischungen aus Verbindungen, die eine oder mehrere Gruppen der Formeln (Ia)-(Ic) enthalten, 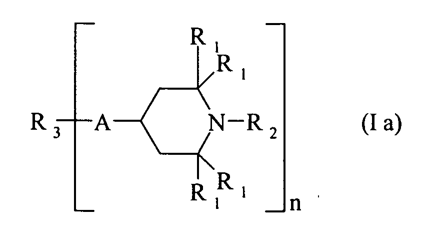 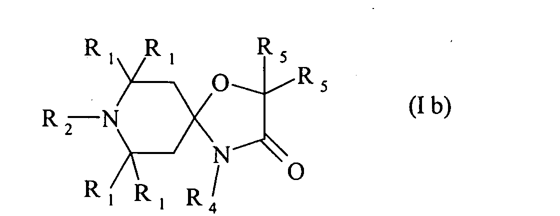 Reaktionsprodukte aus 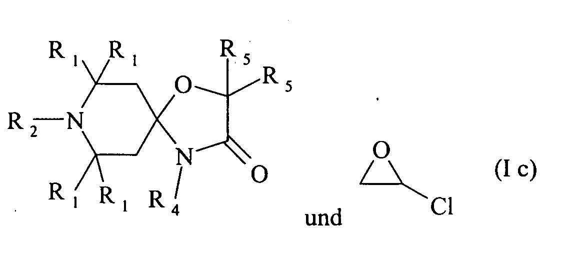 worin jeweils unabhängig voneinander
A -O- oder -NR'-,
R' H, C₁-C₁₈-Alkyl oder eine der Gruppen 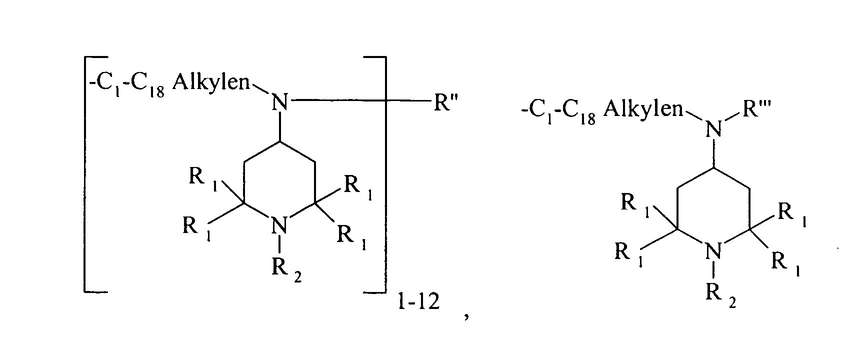
R" H, C₁-C₁₈-Alkyl,
R"' H, einen aliphatischen, cycloaliphatischen, aromatischen oder heteroaromatischen Rest,
R₁ C₁-C₁₈-Alkyl, oder jeweils zwei an dem gleichen Kohlenstoffatom gebundene R₁ einen C₄-C₈-Cycloalkyl Rest,
R₂ H, C₁-C₁₈-Alkyl oder C₇-C₁₈-Alkylaryl,
R₃ H, einen n-wertigen aliphatischen, cycloaliphatischen, aromatischen oder heteroaromatischen Rest,
R₄ C₁-C₁₈-Alkyl -C(O)-C₁-C₁₈-Alkyl oder -C₁-C₈-Alkyl -C(O)O-C₁-C₁₈-Alkyl;
R₅ H, C₁-C₁₈-Alkyl, C₄-C₁₈-Cycloalkyl oder jeweils zwei an dem gleichen Kohlenstoffatom gebundene R₅ einen C₄-C₁₈-Cycloalkyl Rest,
n eine ganze Zahl > 0
bedeuten, und
organische Säuren bzw. deren Derivaten, die eine oder mehrere Gruppen der Formeln (IIa)-(IIc) enthalten, 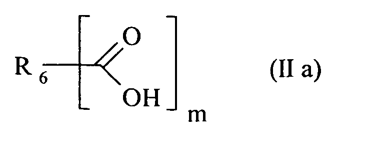 worin jeweils unabhängig voneinander
R₆ H, einen m-wertigen aliphatischen, cycloaliphatischen, aromatischen oder heteroaromatischen Rest,
m eine ganze Zahl > 0 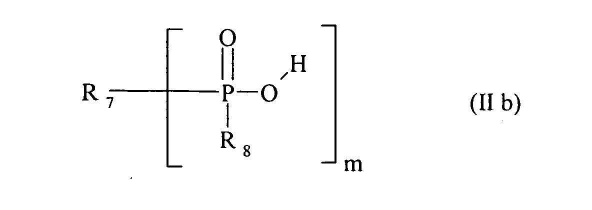
worin jeweils unabhängig voneinander
R₇ einen m-wertigen aliphatischen, cycloaliphatischen, aromatischen, heteroaromatischen Rest oder einen Rest -OR₉;
R₈ H, einen aliphatischen, cycloaliphatischen, aromatischen, , heteroaromatischen Rest oder einen Rest -OR₉;
R₉ einen aliphatischen, cycloaliphatischen, aromatischen, oder heteroaromatischen Rest
m eine ganze Zahl > 0 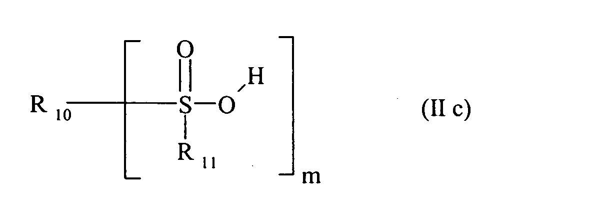
worin jeweils unabhängig voneinander
R₁₀ einen m-wertigen aliphatischen, cycloaliphatischen, aromatischen, oder heteroaromatischen Rest oder einen Rest -OR₁₂;
R₁₁ ein Elektronenpaar oder =O;
R₁₂ einen aliphatischen, cycloaliphatischen, aromatischen, oder heteroaromatischen Rest
m eine ganze Zahl > 0
bedeuten.

2. Salzartige Reaktionsprodukte gemäss Anspruch 1 der allgemeinen Formel (III a)-(III i) 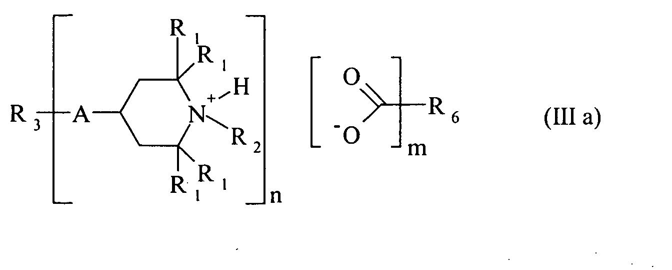 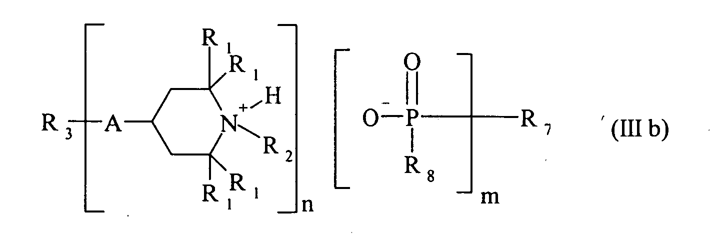 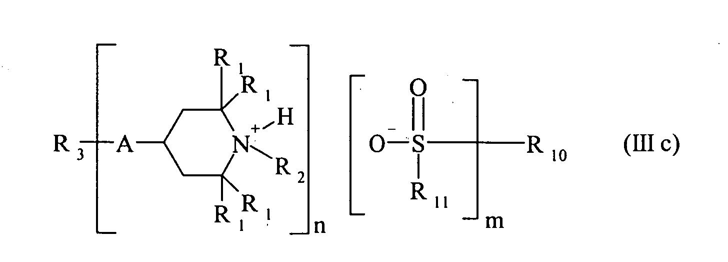 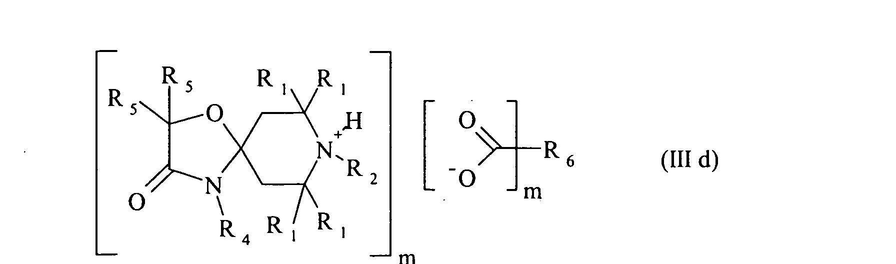 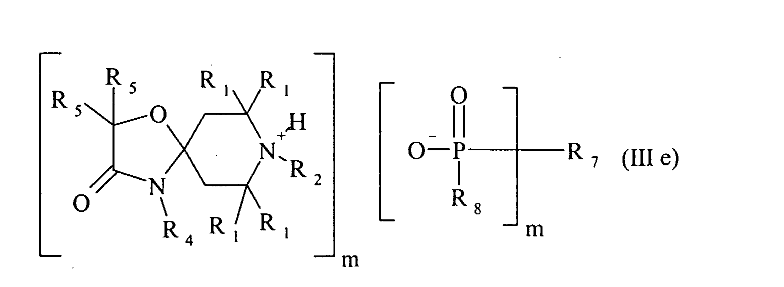 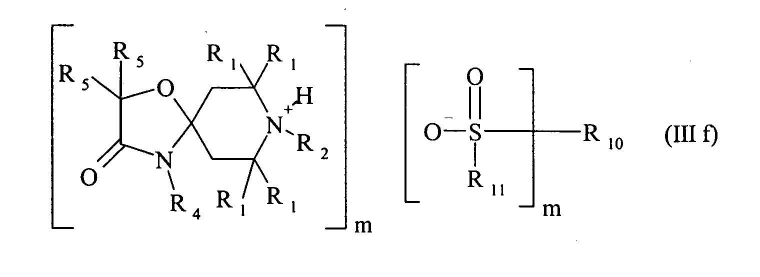 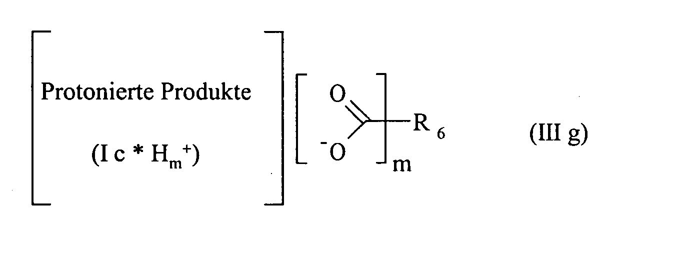 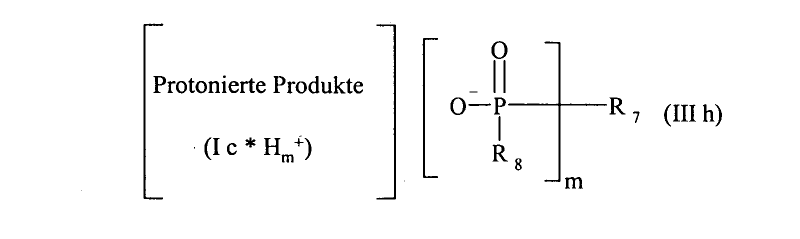 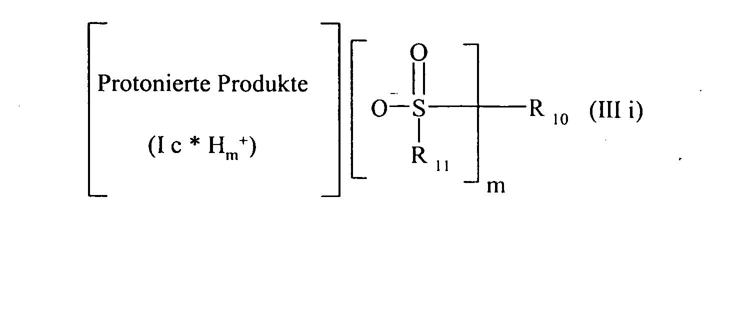 worin n und m identisch und grösser als Null sind und die anderen Substituenten wie in Anspruch 1 definiert sind.

3. Verbindungen der Formel (IV) - (VI) 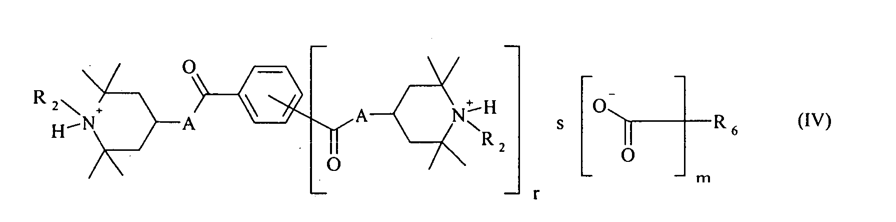 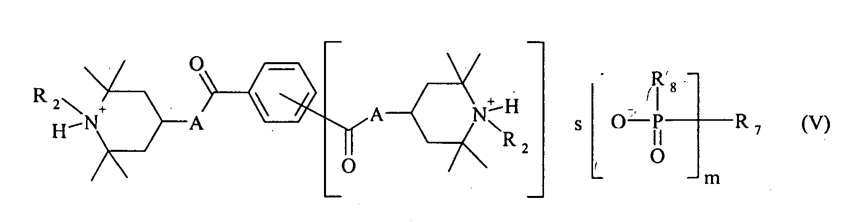 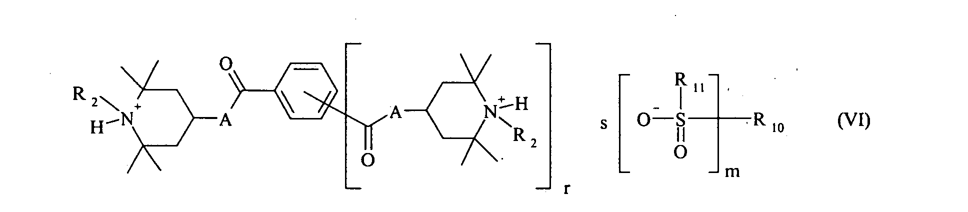 wobei
r eine ganze Zahl zwischen 0 und 3,
s (r+1 )/m bedeuten und m wie oben definiert ist.

4. Vorgefertigte Mischungen gemäss Anspruch 1 bestehend aus den beiden Komponenten I und II in molaren Verhältnissen von 1:99 bis 99: 1, insbesonders von 45:55 bis 55:45, bevorzugt von 50:50.

5. Verfahren zur Herstellung von salzartigen Reaktionsprodukten gemäss Anspruch 2 oder 3 durch Reaktion von einer oder mehreren HALS-Verbindungen der allgemeinen Formeln (Ia)-(Ic) mit einer oder mehreren organischen Säuren bzw. deren Derivaten der allgemeinen Formeln (IIa)-(IIc).

6. Verfahren zur Herstellung der vorgefertigten Mischungen gemäss Anspruch 4 durch Formgebung aus der Schmelze (Tropfgranulation, Prilling, Extrusion, etc.), Kompaktierung (Rollenkompaktierung, Tablettierung, Brikettierung, Pressgranulation, etc.) oder Granulationsverfahren (Sprühen, Wirbelschichtgranulation, Trommeln, Rondieren, etc.).

7. Salzartige Reaktionsprodukte gemäss Anspruch 1, 2 oder 3, **dadurch gekennzeichnet, dass** sie als HALS-Verbindung der Formeln (Ia)-(Ic) 1,3-Benzoldicarboxamid, N,N'-bis(2,2,6,6-tetramethyl-4-piperidinyl) (Nylostab® S-EED® ), 2,2,4,4-Tetramethyl-7-oxa-3,20-diazadispiro-[5.1.11.2]heneicosan-21-on (Hostavin® N 20), Poly[[6-[(1,1,3,3-tetramethylbutyl)amino]-1,3,5-trazin-2,4-diyl][(2,2,6,6-tetramethyl-4-piperidinyl)imino]-1,6-hexandiyl-[(2,2,6,6-tetramethyl-4-piperidinyl)imino]] oder das Reaktionsprodukt aus Hostavin® N 20 und Epichlorhydrin (Hostavin® N 30) enthalten.

8. Vorgefertigte Mischungen gemäss Anspruch 1 oder 4, **dadurch gekennzeichnet, dass** sie als HALS-Verbindung der Formel (Ia)-(Ic) 1,3-Benzoldicarboxamid, N,N'-bis(2,2,6,6-tetramethyl-4-piperidinyl) (Nylostab® S-EED® ), 2,2,4,4-Tetramethyl-7-oxa-3,20-diazadispiro-[5.1.11.2]heneicosan-21-on (Hostavin® N 20), Poly[[6-[(1,1,3,3-tetramethylbutyl)amino]-1,3,5-trazin-2,4-diyl][(2,2,6,6-tetramethyl-4-piperidinyl)imino]-1,6-hexandiyl-[(2,2,6,6-tetramethyl-4-piperidinyl)imino]] oder das Reaktionsprodukt aus Hostavin® N 20 und Epichlorhydrin (Hostavin® N 30) enthalten.

9. Salzartige Reaktionsprodukte gemäss Anspruch 1, 2 oder 3, **dadurch gekennzeichnet, dass** sie als organische Säuren der Formeln (IIa)-(IIc) Adipinsäure, Terephthalsäure, Isophthalsäure, Phthalsäure, Benzoesäure, Essigsäure, Methylphosphinsäure, Dimethylphosphinsäure, Methylethylphosphinsäure, Ethyl-phosphinsäure, Diethylphosphinsäure, Propylphosphinsäure, Di-propylphosphinsäure, Butylphosphinsäure, Dibutylphosphinsäure, Hexylphosphinsäure, Dihexylphosphinsäure, Octylphosphinsäure, Dioctylphosphinsäure, Cyclohexylphosphinsäure, Dicyclohexylphosphinsäure, Phenylphosphinsäure, Diphenylphosphinsäure, Tolylphosphinsäure, Ditolylphosphinsäure, Xylylphosphinsäure, Dixylylphosphinsäure, Biphenylphosphinsäure, Di-biphenylphosphinsäure, Methylenbisphosphinsäure, Ethylenbisphosphinsäure, 1,2-Diethyl-ethylenbisphosphinsäure, Phenylethylphosphinsäure, Di(phenylethyl)phosphinsäure, Methylphosphonsäure, Ethylphosphonsäure, Ethylendiphosphonsäure, Methylendiphosphonsäure, Methansulfonsäure, Ethansulfonsäure, Benzolsulfonsäure oder Toluolsulfonsäure enthalten.

10. Vorgefertigte Mischungen gemäss Anspruch 1 oder 4, **dadurch gekennzeichnet, dass** sie als organische Säuren der Formeln (IIa)-(IIc) Adipinsäure, Terephthalsäure, Isophthalsäure, Phthalsäure, Benzoesäure, Essigsäure, Methylphosphinsäure, Dimethylphosphinsäure, Methylethylphosphinsäure, Ethyl-phosphinsäure, Diethylphosphinsäure, Propylphosphinsäure, Di-propylphosphinsäure, Butylphosphinsäure, Dibutylphosphinsäure, Hexylphosphinsäure, Dihexylphosphinsäure, Octylphosphinsäure, Dioctylphosphinsäure, Cyclohexylphosphinsäure, Dicyclohexylphosphinsäure, Phenylphosphinsäure, Diphenylphosphinsäure, Tolylphosphinsäure, Ditolylphosphinsäure, Xylylphosphinsäure, Dixylylphosphinsäure, Biphenylphosphinsäure, Di-biphenylphosphinsäure, Methylenbisphosphinsäure, Ethylenbisphosphinsäure, 1,2-Diethyl-ethylenbisphosphinsäure, Phenyl-ethylphosphinsäure, Di(phenyl-ethyl)phosphinsäure, Methylphosphonsäure, Ethylphosphonsäure, Ethylendiphosphonsäure, Methansulfonsäure, Ethansulfonsäure, Benzolsulfonsäure oder Toluolsulfonsäure enthalten.

11. Kompaktierte, vorgefertigte Mischungen gemäss Anspruch 1 oder 4, **dadurch gekennzeichnet, dass** sie auf einem Walzen- oder Rollenkompaktor zu einem stabilen, farblosen und frei fließendem Granulat geformt wurden.

12. Verwendung der salzartigen Reaktionsprodukte bzw. der vorgefertigten Mischungen gemäss Anspruch 1 zur Stabilisierung von Polymeren gegen Abbau durch Licht oder Hitze, insbesonders von polaren Polymeren wie Polyamiden und Polyestern.

13. Verwendung der salzartigen Reaktionsprodukte bzw. der vorgefertigten Mischungen gemäss Anspruch 1 zur Verbesserung der Verarbeitungseigen-schaften, des Glanzes, der Oberflächengüte und der mechanischen Eigenschaften von Polymeren, insbesonders von polaren Polymeren wie Polyamiden und Polyestern.
